# EUROPEAN PATENT SPECIFICATION

(11) **EP 2 516 298 B1**
(45) Date of publication and mention of the grant of the patent: **10.06.2015**
(21) Application number: 10785448.1
(22) Date of filing: 07.12.2010
(51) Int. Cl.: B65G 37/00, B65G 47/31, B65B 35/14, B65B 35/24, B65B 35/56, B65B 23/12

(54) **APPARATUS AND METHOD FOR MANOEUVRING PRODUCTS**
Vorrichtung und Verfahren zur Manövrierung von Produkten
Appareil et procédé de manoeuvre de produits

(30) Priority: 21.12.2009 EP 09180061
(43) Date of publication of application: 31.10.2012
(73) Proprietor: Nestec S.A., 1800 Vevey (CH)
(72) Inventor: KERSHAW, Andrew, Paul, Yorkshire YO41 4JX (GB); BAKER, Jeremy, Keith, Warwickshire CV21 3QQ (GB); JEZEQUEL, Alex, Julien, West Midlands CV5 7NR (GB)
(74) Representative: Gagliardi, Tatiana
(86) International application number: PCT/EP2010/069027
(87) International publication number: WO 2011/076556

(56) References cited:
- EP-B1- 1 581 061
- GB-A- 898 188
- NL-C2- 1 028 406
- US-A- 2 995 880
- US-A- 4 823 930
- US-A- 6 131 372

## Description

### Field of the Invention

This invention relates to an apparatus and method for manoeuvring food products prior to packaging. In particular, though not exclusively, the invention relates to such an apparatus and method for fragile food products having an elongate shape, such as extruded confectionery or bakery products.

### Background to the Invention

The packaging of some elongate food products has previously been carried out by a roll wrapping process. According to the roll wrapping process, a web of packaging material is simply wound around each product. The packaging material for such products is typically a single layer plastics material or a laminate consisting of plastics and aluminium foil layers.

It has been recognised in the art that conventional roll wrapping processes are disadvantageous because they are not economical in their use of the packaging material. Furthermore, conventional roll wrapping processes are not capable of providing a hermetic seal, with the consequence that the packaged products may have short shelf lives (this being a particular problem in relation to packaged food products). Moreover, roll wrapping processes are unsuitable for many products for a variety of other reasons.

For the packaging of many food products, "form, fill and seal" processes capable of providing a hermetic seal are used. One such process suitable for packaging elongate food products is known as flow wrapping. In the flow wrapping process, a continuous web of packaging material is fed around a folding box which serves to form the material into the desired cross-sectional shape. At the same time, elongate food products are sequentially moved into the packaging material by an in-feed conveyor. As the products reach the end of the packaging line, heated rollers make transverse seals across the width of the packaging material to separate adjacent ones of the products. A further set of heated rollers join the opposite longitudinal edges of the packaging material together to enclose the products before a cutting knife separates the individual packages. A flow wrapping process is described in more detail in GB 2303111 A.

A problem with the flow wrapping process described above is that relatively complicated machinery is required. Furthermore, flow wrapping can cause cosmetic damage to fragile food products.

Another form, fill and seal process used for the packaging of some food products is known as stick-pack packaging. In this process, a continuous web of packaging material is folded around a filler tube. Transverse and longitudinal seals are formed in the packaging material at the same time as a liquid, semi-liquid or granular solid is pumped through the filler tube and packaged in the resulting stick-packs. Stick-pack packaging is described in more detail in US 2007/0173395 A1.

Although the cycle time for stick-pack packaging is usually somewhat greater than that for flow wrapping, stick-pack packaging machines having multiple, parallel packaging lines are available. For example, stick-pack packaging machines having 16 parallel lines are known. Consequently, stick-pack packaging is generally very efficient because high packaging rates can be maintained.

Stick-pack packaging has heretofore only been used for packaging pumpable or flowing food products such as semi-liquid sauces and granular sugar. One reason for the lack of application of stick-pack packaging to non-flowing solids relates to the technical difficulties of orientating and feeding such products into multiple lines at sufficient speeds.

NL 1028406 discloses an apparatus for manoeuvring randomly orientated products prior to packaging, the apparatus comprising at least one conveying means for conveying the products and a vibratory conveyor arranged to receive the products from the at least one conveying means, wherein the vibratory conveyor comprises: an upstream portion having a conveying surface arranged for increasing transverse spacings between the products; and a downstream portion having mechanical alignment means arranged to align the products and sort the products into a plurality of lines, the mechanical alignment means comprising upstanding members having longnitudinal guide surfaces and/or elongate channels formed into the conveying surface of the vibratory conveyor.

### Summary of the Invention

The inventors have surprisingly found that the stick-pack packaging process only used before for packaging pumpable or flowing food products such as semi-liquid sauces and granular powder is suitable for the packaging of non-flowing, solid, food products. Moreover, it has been surprisingly found that stick-pack packaging is particularly suitable for the packaging of fragile or very fragile confectionery and bakery products because the risk of damage to the products as they pass through the packaging machine is low.

The apparatus according to the invention allow following improvements: packing individually at very high speed very fragile solid food products, such as wafer products.

Furthermore, the inventors have conceived an apparatus and method for manoeuvring fragile food products which overcomes at least some of the technical difficulties associated with orientating and feeding the products into multiple lines.

Accordingly, a first aspect of the invention provides an apparatus for manoeuvring randomly orientated products prior to packaging, the apparatus comprising at least one conveying means (5, 7) for conveying the products and a vibratory conveyor (9) arranged to receive the products from the at least one conveying means (5, 7), wherein the vibratory conveyor (9) comprises: an upstream portion having a conveying surface arranged for increasing transverse spacings between the products; and a downstream portion having mechanical alignment means (23) arranged to align the products and sort the products into a plurality of lines, and wherein the mechanical alignment means (23) comprise upstanding members having longitudinal guide surfaces and/or elongate channels formed into the conveying surface of the vibratory conveyor (9); characterised in that: the apparatus further comprises an in-feed conveyor (13) for a packaging machine (15), the in-feed conveyor (13) being arranged to receive the products from the vibratory conveyor (9), the vibratory conveyor (9) and the in-feed conveyor (13) defining a longitudinal separation gap (25) for the removal of detritus and under-sized products.

It has been found that this combination of at least one conveying means and a vibratory conveyor having different upstream and downstream portions is particularly suitable for supplying food products to a multi-line or multi-lane stick-pack packaging machine at an appropriate rate.

For clarification it is to be understood the expression multi-line as a packaging system with several parallel machines and multi-lane as a single machine with several parallel infeeds.

In particular, the upstream portion of the vibratory conveyor, which may have a flat conveying surface, serves to increase transverse spacings between the products and the downstream portion of the vibratory conveyor serves to align the products and sort them into multiple lines. By increasing the transverse spacings between products, the products can more easily be sorted into multiple lines without damage to the products.

The surface of the upstream portion of the vibratory conveyor has a surface which does not constrain the transverse movement of the products, so that the vibrations cause transverse spreading of the products as they are conveyed primarily in a longitudinal direction. The surface of this portion of the vibratory conveyor may be substantially flat.

The mechanical alignment means of the downstream portion of the vibratory conveyor may comprise upstanding members having longitudinal guide surfaces pairs of which may be tapered. Alternatively, the mechanical alignment means may comprise elongate channels formed into the conveying surface of the vibratory conveyor. In this case, the channels may have any suitable cross-section, including channels having parallel walls (e.g. having a rectangular cross-section) or tapered walls (e.g. having a triangular cross-section). The mechanical alignment means are arranged to engage, align and sort the products into multiple lines.

The longitudinal positions of the leading edges of the mechanical alignment means may vary with their transverse location. For example, the leading edges of the relatively outboard mechanical alignment means may be positioned upstream of the leading edges of the relatively central mechanical alignment means.

The mechanical alignment means are preferably arranged to sort the products into (geometrically) parallel lines of products, although diverging or converging lines are also possible if the transverse spread of products does not match that of in-feed lines or in-feed lane of the packaging machine.

The vibratory conveyor may, for example, be an electromagnetic-type vibratory conveyor. Suitable conveyors of this type are commercially available and will be known to those skilled in the art. Other types of vibratory conveyor may also be suitable.

The apparatus may also comprise an in-feed conveyor for a packaging machine arranged to receive the products from the vibratory conveyor, the vibratory conveyor and the in-feed conveyor defining a separation gap for the removal of detritus and under-sized products. In this way the packaging of matter other than acceptable food products can be minimised. In general, it is preferred that the separation gap be set to approximately one third of the product's length. For packaging machines not requiring an in-feed conveyor, the separation gap may be provided directly between the vibratory conveyor and the packaging machine.

The at least one conveying means may comprise a plurality of conveying means, in which case each conveying means other than the first may be arranged to convey products at a higher speed than an immediately upstream conveyor means. In this way, the longitudinal spacings between the products may be increased to thereby minimise product damage. The longitudinal spacings between the products may also be increased to thereby facilitate the uniform distribution and separation of the products.The at least one conveying means may alternatively or additionally serve as a product buffer so that the product forming line need not be stopped during short, planned stoppages of the packaging machine.

Each conveying means of the plurality of conveying means may be a belted conveyor, such as an endless belt conveyor. In this case, the conveyors may be inclined such that the upstream edge of a relatively downstream conveyor is arranged below the downstream edge of a relatively upstream conveyor. In this way, the conveying height of the entire apparatus can be maintained relatively constant from end to end. Static chutes may be provided between the conveyors to reduce the risk of damaging the products.

In a particularly preferred embodiment, the plurality of conveying means consist of two endless· belt conveyors inclined at an angle of 8.5 degrees to the horizontal, with a static chute provided between the conveyors.

The apparatus may further comprise a static chute arranged upstream of the plurality of conveying means for providing a supply of products to a first conveying means of the plurality. The static chute may be arranged to increase or reduce the transverse spacings between the products. The static chute may be angled downwardly at an angle of from 20 to 40 degrees, preferably from 22 to 28 degrees, and most preferably about 25 degrees.

The invention also provides a packaging apparatus for products, more particularly randomly orientated food products comprising the apparatus described above and a stick-pack packaging machine arranged to receive products from the apparatus and package the products in stick-packs, wherein the stick-pack packaging machine comprises multiple packaging lines arranged in parallel to receive respective lines of the products. The stick-pack packaging machine may, for example, comprise 16 packaging lines.

Delivery tubes of the stick-pack packaging machine, which are arranged to receive the lines of products, preferably have a substantially vertical orientation so that the products can pass through the tubes by gravity.

According to another aspect of the invention, there is provided use of the apparatus described above for packaging non-flowing solid food products, such as fragile confectionery or bakery products. The products may be of elongate form and have a substantially constant shape and size.

According to yet another aspect of the invention, there is provided a method of manoeuvring randomly orientated products, such as food products, prior to packaging, the method comprising conveying the products using at least one conveying means and further conveying the products using a vibratory conveyor arranged to receive the products from the at least one conveying means, wherein:
transverse spacings between the products are increased as the products are conveyed by an upstream portion of the vibratory conveyor; and
the products are aligned and sorted into a plurality of lines by a downstream portion of the vibratory conveyor having mechanical alignment means.

Other aspects and features of the invention will be apparent from the detailed description of the invention which follows.

### Brief Description of the Drawings

Specific embodiment of the invention will now be described, by way of example only, with reference to the accompanying drawings, in which:
Figure 1 is a schematic plan view of an apparatus for manoeuvring elongate food products according to the invention;
Figure 2 is a schematic side view of the apparatus shown in Figure 1;
Figure 3 is a schematic plan view of another apparatus for manoeuvring elongate food products according to the invention; and
Figure 4 is a flow chart for use in explaining a method for manoeuvring elongate food products according to the invention.

### Detailed Description

The invention provides an apparatus for manoeuvring products, more particularly randomly orientated food products prior to packaging. The apparatus comprises at least one conveying means for conveying the products and a vibratory conveyor arranged to receive the products from the at least one conveying means. The vibratory conveyor comprises an upstream portion having a conveying surface arranged for increasing transverse spacings between the products. The vibratory conveyor also comprises a downstream portion having mechanical alignment means arranged to align the products and sort the products into a plurality of lines.

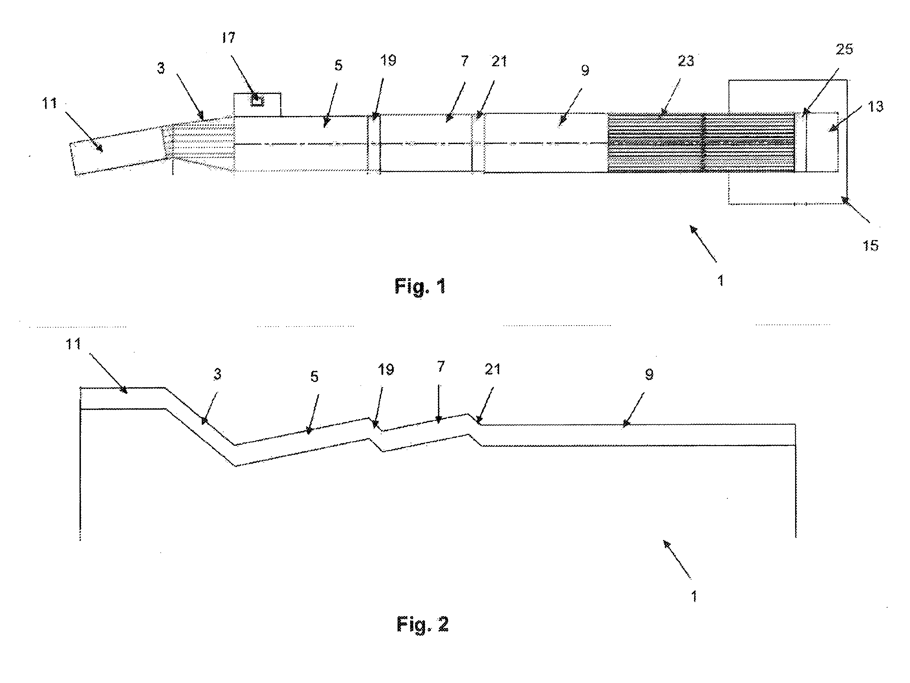

With reference to Figures 1 and 2, an apparatus 1 for manoeuvring elongate food products according to the invention comprises a static chute 3, first and second endless belt conveyors 5, 7 and a vibratory conveyor 9. The apparatus 1 is arranged to receive randomly orientated elongate confectionery products from an out-feed conveyor 11 of a product forming line and to supply a plurality of lines of aligned products to the in-feed conveyor 13 of a multiple-line stick-pack packaging machine 15.

The apparatus also comprises an operator console 17 which includes a controller for controlling the operation of the first and second endless belt conveyors 5, 7 and the vibratory conveyor 9.

Suitable designs for the product forming line will be known to those skilled in the art. For example, the product forming line may comprise an extruder arranged to extrude cereal-based confectionery bars. Similarly, suitable designs for the stick-pack packaging machine 15 will be known to those skilled in the art. One such machine is available from the company MA 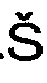 EK HOLDING, a.s. of Czech Republic under the product designation "HBV 4". Such a machine comprises delivery tubes into which the products are dropped one-by-one.

The static chute 3 comprises a smooth surface angled downwards at an angle of 25 degrees to the horizontal, which angle has been found to allow products to easily slide without causing damage. Depending on the nature of the product being conveyed, it may be necessary to adjust the angle of the static chute 3 in a manner which will be understood by those skilled in the art. The surface of the static chute 3 is provided with diverging sides and a concave surface so that the transverse spacings between the products are increased.

The static chute 3 is arranged to supply products to the first endless belt conveyor 5 and the first endless belt conveyor 5 is arranged to convey products to a second endless belt conveyor 7. The first and second endless belt conveyors 5, 7 are linked by another static chute 19 and are inclined at an angle of 8.5 degrees to the horizontal so that the entire apparatus 1 is maintained at a relatively consistent height. Suitable designs for the endless belt conveyors 5, 7 will be known to those skilled in the art.

The second endless belt conveyor 7 is arranged to operate at a higher speed than that of the first endless belt conveyor 5, and the first endless belt conveyor 5 is arranged to operate at a higher speed than that of the out-feed conveyor 11 of the product forming line. In this way, the endless belt conveyors 5, 7 serve to increase the longitudinal spacings between the products. The endless belt conveyors 5, 7 may also function as a buffer store for products, thereby allowing the product forming line to continue running during short stoppages of the stick-pack packaging machine 15.

The second endless belt conveyor 7 is arranged to convey products to an electromagnetic-type vibratory conveyor 9 via a static chute 21. Suitable designs for the vibratory conveyor 9 will be known to those skilled in the art. Such conveyors are available from Cox & Plant Products Limited, a UK company.

The vibratory conveyor 9 is arranged to convey the products towards the in-feed conveyor 13 of the stick-pack packaging machine 13. A first, upstream portion of the vibratory conveyor 9 is provided with a smooth conveying surface, which allows the products to spread out in a transverse direction. A second, downstream portion of the vibratory conveyor 9 is provided with mechanical alignment means 23 in the form of "V" shaped, or triangular, channels formed in the conveying surface.

The alignment channels of the vibratory conveyor 9 are arranged across the transverse width of the conveyor 9 and are parallel to the conveying direction. The channels are arranged in straight lines. The channels serve to align the products in an end-to-end orientation, i.e. with their long sides parallel to the length direction of the channels. Furthermore, the channels serve to sort the products into a plurality of lines of products.

The vibratory conveyor 9 therefore provides a plurality of lines of aligned products to the in-feed conveyor 13 of the stick-pack packaging machine 15. The lines are arranged so that they are provided to respective delivery tubes of the stick-pack packaging machine 15, which delivery tubes have a substantially vertical orientation.

A longitudinal separation gap 25 of one third of the length of the products is provided between the vibratory conveyor 9 and the in-feed conveyor 13 of the stick-pack packaging machine 15. The separation gap 25 prevents matter other than the food products from being packaged, and allows for the removal of detritus and under-sized products.

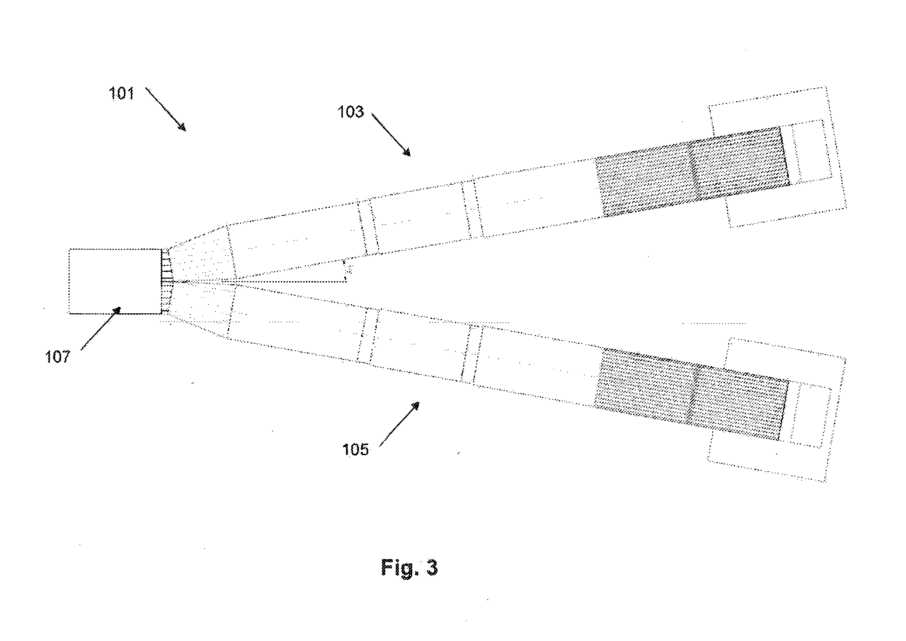

Figure 3 is a schematic plan view of another apparatus 101 for manoeuvring elongate food products according to the invention. This apparatus 101 is similar to the apparatus shown in Figures 1 and 2, except that a pair of lines 103, 105 each extends from the out-feed conveyor 107 of the product forming line. Each of these lines 103, 105 is similar to the apparatus shown in Figures 1 and 2. The apparatus 101 shown in Figure 3 is therefore capable of a much higher packaging rate than that shown in Figures 1 and 2.

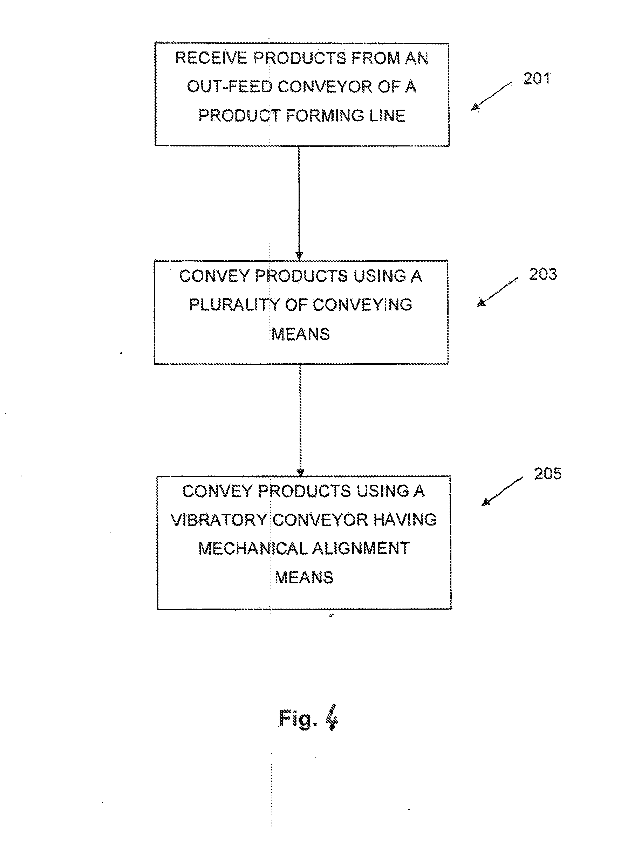

Figure 4 is a flow chart for use in explaining a method for manoeuvring elongate food products according to the invention. The method may conveniently be performed using the apparatus illustrated in Figures 1 and 2 or Figure 3.

According to a first step of the method, elongate confectionery products are received from an out-feed conveyor of a product forming line (201). The products are then conveyed using a plurality of conveying means arranged in series (203). Each conveying means other than the first conveying means is arranged to convey the products at a higher velocity than the immediately upstream conveying means. In this way, the longitudinal separation distance between products can be increased.

After being conveyed by a final one of the conveying means, the products are conveyed by a vibratory conveyor (205). The vibratory conveyor is provided with a first portion having a float surface of transversely spreading the products and a second portion having mechanical alignment means in the form of "V" shaped channels formed in the conveying surface of the vibratory conveyor. The mechanical alignment means serve to align the products and sort them into a plurality of lines suitable for delivery to a multiple-line stick-pack packaging machine.

Specific examples of the invention have been described above. Various changes within the scope of the claims will be readily apparent to those skilled in the art.

For example, the apparatus described above is suitable for manoeuvring food products prior to packaging. However, the apparatus may alternatively be suitable or adapted for manoeuvring other types of products, such as cosmetic products and medical equipment and supplies, prior to packaging.

## Claims

1. An apparatus for manoeuvring randomly orientated products prior to packaging, the apparatus comprising at least one conveying means (5, 7) for conveying the products and a vibratory conveyor (9) arranged to receive the products from the at least one conveying means (5, 7), wherein the vibratory conveyor (9) comprises: an upstream portion having a conveying surface arranged for increasing transverse spacings between the products; and a downstream portion having mechanical alignment means (23) arranged to align the products and sort the products into a plurality of lines, and wherein the mechanical alignment means (23) comprise upstanding members having longitudinal guide surfaces and/or elongate channels formed into the conveying surface of the vibratory conveyor (9); **characterised in that**:
the apparatus further comprises an in-feed conveyor (13) for a packaging machine (15), the in-feed conveyor (13) being arranged to receive the products from the vibratory conveyor (9),
the vibratory conveyor (9) and the in-feed conveyor (13) defining a longitudinal separation gap (25) for the removal of detritus and under-sized products.

2. Apparatus according to claim 1, wherein the mechanical alignment means (23) are arranged to sort the products into parallel lines of products.

3. Apparatus according to any preceding claim, wherein the vibratory conveyor is an electromagnetic-type vibratory conveyor.

4. Apparatus according to any preceding claim, wherein the at least one conveying means (5, 7) comprises a plurality of conveying means (5, 7), each conveying means (7) other than the first being arranged to convey the products at a higher speed than an immediately upstream conveying means.

5. Apparatus according to claim 4, wherein each of the conveying means is a belted conveyor.

6. Apparatus according to any preceding claim, further comprising a static chute (3) arranged upstream of the at least one conveying means (5, 7) for providing a supply of products to a first one of the at least one conveying means (5), wherein the static chute (3) is arranged to increase the transverse spacings between products.

7. Apparatus according to any preceding claim, for manoeuvring randomly orientated food products prior to packaging.

8. Packaging apparatus for randomly orientated products comprising: apparatus according to any preceding claim; and a stick-pack packaging machine (15) arranged to receive products from the apparatus and package the products in stick-packs, wherein the stick-pack packaging machine (15) comprises multiple packaging lines arranged in parallel to each receive respective lines of the products.

9. Packaging apparatus according to claim 8, wherein delivery tubes of the stick-pack packaging machine (15) have a substantially vertical orientation.

10. Use of the apparatus according to any preceding claim for packaging non flowing solid food products.

11. Use according to claim 10, wherein the food products are confectionery or bakery products.

12. Use according to claim 10 or 11, wherein the food products are elongate food products having a substantially constant shape and size.

13. A method of manoeuvring randomly orientated products prior to packaging, the method comprising conveying the products using at least one conveying means (5, 7) and further conveying the products using a vibratory conveyor (9) arranged to receive the products from the at least one conveying means (5, 7), wherein: transverse spacings between the products are increased as the products are conveyed by an upstream portion of the vibratory conveyor; the products are aligned and sorted into a plurality of lines by a downstream portion of the vibratory conveyor having mechanical alignment means (23) wherein the mechanical alignment means (23) comprise upstanding members having longitudinal guide surfaces and/or elongate channels formed into the conveying surface of the vibratory conveyor (9); **characterised in that**
a separation gap (25) for the removal of detritus and undersized products is defined by an in-feed conveyor (13) for a packaging machine (15) arranged to receive the products from the vibratory conveyor (9).

14. Method according to claim 13, wherein the products are food products.

## Patentansprüche

1. Vorrichtung zum Bewegen von zufällig ausgerichteten Produkten vor dem Verpacken, wobei die Vorrichtung mindestens eine Fördereinrichtung (5, 7) zum Fördern der Produkte und einen Rüttelförderer (9) umfasst, der zum Aufnehmen der Produkte aus der mindestens einen Fördereinrichtung (5, 7) angeordnet ist, wobei der Rüttelförderer (9) Folgendes aufweist: einen vorgeschalteten Abschnitt mit einer Förderfläche, die zur Vergrößerung von Querabständen zwischen den Produkten angeordnet ist; sowie einen nachgeschalteten Abschnitt mit mechanischen Ausrichtungseinrichtungen (23), die zum Ausrichten der Produkte und Sortieren der Produkte in mehrere Reihen vorgesehen sind, und wobei die mechanischen Ausrichtungseinrichtungen (23) aufrechte Teile mit Führungsflächen in Längsrichtung und/oder länglichen Kanälen umfassen, die in die Förderfläche des Rüttelförderers (9) hineingeformt sind; **dadurch gekennzeichnet, dass** die Vorrichtung weiterhin ein Zubringerförderband (13) für eine Verpackungsmaschine (15) umfasst, wobei das Zubringerförderband (13) derart angeordnet ist, dass es die Produkte von dem Rüttelförderer (9) aufnimmt, wobei der Rüttelförderer (9) und das Zubringerförderband (13) einen Trennungsspalt (25) in Längsrichtung zur Entfernung von Trümmern und zu kleinen Produkten festlegen.

2. Vorrichtung gemäß Anspruch 1, wobei die mechanischen Ausrichtungseinrichtungen (23) zum Sortieren der Produkte in parallele Produktreihen angeordnet sind.

3. Vorrichtung gemäß einem vorhergehenden Anspruch, wobei der Rüttelförderer ein elektromagnetischer Rüttelförderer ist.

4. Vorrichtung gemäß einem vorhergehenden Anspruch, wobei die mindestens eine Fördereinrichtung (5, 7) mehrere Fördereinrichtungen (5, 7) umfasst, wobei jede Fördereinrichtung (7) außer der ersten derart angeordnet ist, dass sie die Produkte mit höherer Geschwindigkeit fördert als eine unmittelbar vorgeschaltete Fördereinrichtung.

5. Vorrichtung gemäß Anspruch 4, wobei jede der Fördereinrichtungen aus einem Bandförderer besteht.

6. Vorrichtung gemäß einem vorhergehenden Anspruch, weiterhin mit einer statischen Rutsche (3), die der mindestens einen Fördereinrichtung (5, 7) vorgeschaltet ist, um eine Zufuhr von Produkten zu einer ersten der mindestens einen Fördereinrichtung (5) bereitzustellen, wobei die statische Rutsche (3) derart angeordnet ist, dass sie die Querabstände zwischen Produkten vergrößert.

7. Vorrichtung gemäß einem vorhergehenden Anspruch zum Bewegen von zufällig ausgerichteten Nahrungsprodukten vor dem Verpacken.

8. Verpackungsvorrichtung für zufällig ausgerichtete Produkte mit: einer Vorrichtung gemäß einem vorhergehenden Anspruch; sowie eine Stick-Pack-Verpackungsmaschine (15), die zum Aufnehmen von Produkten aus der Vorrichtung und zum Verpacken der Produkte in Stick-Packs vorgesehen ist, wobei die Stick-Pack-Verpackungsmaschine (15) mehrere parallel angeordnete Verpackungsreihen umfasst, die jeweils entsprechende Reihen der Produkte aufnehmen.

9. Verpackungsvorrichtung gemäß Anspruch 8, wobei Abgaberohre der Stick-Pack-Verpackungsmaschine (15) eine im Wesentlichen senkrechte Ausrichtung aufweisen.

10. Verwendung der Vorrichtung gemäß einem vorhergehenden Anspruch zum Verpacken von nicht fließenden, festen Nahrungsprodukten.

11. Verwendung gemäß Anspruch 10, wobei die Nahrungsprodukte aus Süßwaren oder Backwaren bestehen.

12. Verwendung gemäß Anspruch 10 oder 11, wobei die Nahrungsprodukte längliche Nahrungsprodukte mit einer im Wesentlichen gleichbleibenden Form und Größe sind.

13. Verfahren zum Bewegen von zufällig ausgerichteten Produkten vor dem Verpacken, wobei das Verfahren das Fördern der Produkte unter Einsatz von mindestens einer Fördereinrichtung (5, 7) und weiterhin das Fördern der Produkte unter Einsatz eines Rüttelförderers (9) umfasst, der zum Aufnehmen der Produkte aus der mindestens einen Fördereinrichtung (5, 7) vorgesehen ist, wobei: Querabstände zwischen den Produkten vergrößert werden, wenn die Produkte von einem vorgeschalteten Abschnitt des Rüttelförderers gefördert werden; die Produkte in mehrere Reihen von einem nachgeschalteten Abschnitt des Rüttelförderers mit mechanischen Ausrichtungseinrichtungen (23) ausgerichtet und sortiert werden, wobei die mechanischen Ausrichtungseinrichtungen (23) aufrechte Teile umfassen, die Führungsflächen in Längsrichtung und/oder längliche Kanäle aufweisen, welche in die Förderfläche des Rüttelförderers (9) hineingeformt sind; **dadurch gekennzeichnet, dass**
ein Trennspalt (25) zur Entfernung von Trümmern und zu kleinen Produkten durch ein Zubringerförderband (13) für eine Verpackungsmaschine (15) festgelegt wird, das zum Aufnehmen der Produkte aus dem Rüttelförderer (9) angeordnet ist.

14. Verfahren gemäß Anspruch 13, wobei es sich bei den Produkten um Nahrungsprodukte handelt.

## Revendications

1. Appareil destiné à manoeuvrer des produits orientés de manière aléatoire avant conditionnement, l'appareil comprenant au moins un moyen de transport (5, 7) pour transporter les produits et un transporteur vibrant (9) agencé pour recevoir les produits en provenance dudit au moins un moyen de transport (5, 7), dans lequel le transporteur vibrant (9) comprend : une partie amont présentant une surface de transport agencée pour augmenter des espacements transversaux entre les produits ; et une partie aval présentant des moyens d'alignement mécaniques (23) agencés pour aligner les produits et trier les produits en une pluralité de lignes, et dans lequel les moyens d'alignement mécaniques (23) comprennent des organes droits présentant des surfaces de guidage longitudinales et/ou des canaux allongés formés dans la surface de transport du transporteur vibrant (9) ; **caractérisé en ce que** :
l'appareil comprend en outre un transporteur d'alimentation (13) pour une machine de conditionnement (15), le transporteur d'alimentation (13) étant agencé pour recevoir les produits en provenance du transporteur vibrant (9), le transporteur vibrant (9) et le transporteur d'alimentation (13) définissant un espace de séparation longitudinal (25) pour le retrait de détritus et de produits sous-dimensionnés.

2. Appareil selon la revendication 1, dans lequel les moyens d'alignement mécaniques (23) sont agencés pour trier les produits en lignes parallèles de produits.

3. Appareil selon l'une quelconque des revendications précédentes, dans lequel le transporteur vibrant est un transporteur vibrant de type électromagnétique.

4. Appareil selon l'une quelconque des revendications précédentes, dans lequel ledit au moins un moyen de transport (5, 7) comprend une pluralité de moyens de transport (5, 7), chaque moyen de transport (7) autre que le premier étant agencé pour transporter les produits à une vitesse supérieure à un moyen de transport juste en amont.

5. Appareil selon la revendication 4, dans lequel chacun des moyens de transport est un convoyeur à bande.

6. Appareil selon l'une quelconque des revendications précédentes, comprenant en outre une glissière statique (3) agencée en amont dudit au moins un moyen de transport (5, 7) pour fournir une alimentation de produits à un premier dudit au moins un moyen de transport (5), dans lequel la glissière statique (3) est agencée pour augmenter les espacements transversaux entre produits.

7. Appareil selon l'une quelconque des revendications précédentes, destiné à manoeuvrer des produits alimentaires orientés de manière aléatoire avant conditionnement.

8. Appareil de conditionnement pour produits orientés de manière aléatoire comprenant : un appareil selon l'une quelconque des revendications précédentes ; et une machine de conditionnement de type bâton (15) agencée pour recevoir des produits en provenance de l'appareil et conditionner les produits en bâtons, dans lequel la machine de conditionnement de type bâton (15) comprend de multiples lignes de conditionnement agencées en parallèle pour que chacune reçoive des lignes respectives des produits.

9. Appareil de conditionnement selon la revendication 8, dans lequel des tubes de distribution de la machine de conditionnement de type bâton (15) présentent une orientation sensiblement verticale.

10. Utilisation de l'appareil selon l'une quelconque des revendications précédentes pour un conditionnement de produits alimentaires solides non coulants.

11. Utilisation selon la revendication 10, dans laquelle les produits alimentaires sont des produits de confiserie ou de boulangerie.

12. Utilisation selon la revendication 10 ou 11, dans laquelle les produits alimentaires sont des produits alimentaires allongés présentant une forme et une taille sensiblement constantes.

13. Procédé de manoeuvre de produits orientés de manière aléatoire avant conditionnement, le procédé comprenant un transport des produits en utilisant au moins un moyen de transport (5, 7) et un autre transport des produits en utilisant un transporteur vibrant (9) agencé pour recevoir les produits en provenance dudit au moins un moyen de transport (5, 7), dans lequel : des espacements transversaux entre les produits sont augmentés alors que les produits sont transportés par une partie amont du transporteur vibrant ; les produits sont alignés et triés en une pluralité de lignes par une partie aval du transporteur vibrant présentant des moyens d'alignement mécaniques (23), dans lequel les moyens d'alignement mécaniques (23) comprennent des organes droits présentant des surfaces de guidage longitudinales et/ou des canaux allongés formés dans la surface de transport du transporteur vibrant (9) ; **caractérisé en ce que**
un espace de séparation (25) pour le retrait de détritus et de produits sous-dimensionnés est défini par un transporteur d'alimentation (13) pour une machine de conditionnement (15) agencé pour recevoir les produits en provenance du transporteur vibrant (9).

14. Procédé selon la revendication 13, dans lequel les produits sont des produits alimentaires.
